# EUROPEAN PATENT APPLICATION

(11) **EP 4 737 764 A1**
(43) Date of publication of application: **06.05.2026**
(21) Application number: 25208256.5
(22) Date of filing: 13.10.2025
(51) Int. Cl.: F16H 1/32

(54) **SPEED REDUCER AND METHOD OF ASSEMBLING SPEED REDUCER**

(30) Priority: 30.10.2024 JP 2024190943
(71) Applicant: Nabtesco Corporation, Tokyo 102-0093 (JP)
(72) Inventor: Wanaka, Yuta, Chiyoda-ku, Tokyo (JP); Hasegawa, Noriaki, Chiyoda-ku, Tokyo (JP)
(74) Representative: Grünecker Patent- und Rechtsanwälte PartG mbB

(57) **Abstract**

A speed reducer includes a case, a carrier that is at least partly disposed in the case, a main bearing disposed between the case and the carrier, and a sealing member that seals between the carrier and the case. At least one of the carrier or the case includes a main body portion and a flange portion. The main bearing is pressed in an axial direction between the main body portion of the carrier and the case. The sealing member is pressed in the axial direction between the flange portion of the carrier and the case. Alternatively, the main bearing is pressed in the axial direction between the main body portion of the case and the carrier. The sealing member is pressed in the axial direction between a flange portion of the case and the carrier.

## Description

### CROSS-REFERENCE TO RELATED APPLICATIONS

This application is based on and claims the benefit of priority from Japanese Patent Application Serial No. 2024-190943 (filed on October 30, 2024), the contents of which are hereby incorporated by reference in its entirety.

### TECHNICAL FIELD

The present disclosure relates to a speed reducer and a method of assembling a speed reducer.

### BACKGROUND

For example, as disclosed in Japanese Patent Application Publication No. 2000-120846 ("the '846 Publication"), a speed reducer is known that includes a case, a carrier at least partly disposed in the case, a main bearing disposed between the case and the carrier, and a sealing member sealing between the carrier and the case. In the speed reducer, one of the carrier or the case rotates relative to the other about a rotational axis. The main bearing and the sealing member are pressed in an axial direction, parallel to the rotational axis, between the carrier and the case.

The pressure required for proper operation of the main bearing differs from that required for proper operation of the sealing member. As for the carrier disclosed in the '846 Publication, a portion of the carrier that presses the main bearing and a portion of the carrier that presses the sealing member move in conjunction with each other relative to the case. As for the case disclosed in the '846 Publication, a portion of the case that presses the main bearing and a portion of the case that presses the sealing member move in conjunction with each other relative to the carrier. Therefore, in the speed reducer of the '846 Publication, the pressure applied to the main bearing in the axial direction and the pressure applied to the sealing member in the axial direction cannot be adjusted independently from each other. Therefore, in the speed reducer of the '846 Publication, it is difficult to ensure stable operation of both the main bearing and the sealing member. One object of the present disclosure is to ensure stable operation of the main bearing and the sealing member in the speed reducer.

### SUMMARY

One aspect of the disclosure provides a speed reducer that includes: a carrier; a main bearing held on the carrier; a case held on the main bearing; a sealing member sealing between the carrier and the case, wherein one of the carrier or the case is configured to rotate relative to the other of the carrier or the case about a rotational axis, wherein the one of the carrier or the case includes a main body portion and a flange portion connected to the main body portion, wherein the main bearing is pressed in an axial direction parallel to the rotational axis between the main body portion and the other of the carrier or the case, and wherein the sealing member is pressed in the axial direction between the flange portion and the other of the carrier or the case.

Another aspect of the disclosure provides a method of assembling a speed reducer. The speed reducer includes: a carrier that includes a carrier body and a carrier flange connected to the carrier body; a main bearing held on the carrier; a case that includes a case body and a case flange connected to the case body, the case being held on the main bearing; and a sealing member sealing between the carrier and the case. The method includes: pressing the main bearing disposed between the carrier body and the case body; connecting the case flange to the case body; connecting the carrier flange to the carrier body; and pressing the sealing member disposed between the carrier flange and the case flange.

### ADVANTAGEOUS EFFECTS

According to the aspects of the disclosure, the operation of the main bearing and the sealing member in the speed reducer can be stabilized.

### BRIEF DESCRIPTION OF THE DRAWINGS

Fig. 1 is a sectional view of a speed reducer for describing an embodiment of the disclosure.
Fig. 2 is a sectional view taken along the line II-II in Fig. 1.
Fig. 3 is an enlarged view of the portion A of Fig. 1.
Fig. 4 illustrates a method of adjusting the pressure applied to a sealing member of a carrier flange.
Fig. 5 illustrates a method of adjusting the pressure applied to a sealing member of a case flange.

### DESCRIPTION OF THE EMBODIMENTS

An embodiment of the disclosure relates to the following items (1) to (7).
(1) A speed reducer including: a case; a carrier at least partly located in the case; a main bearing located between the case and the carrier; and a sealing member for sealing between the carrier and the case, wherein one of the carrier or the case is configured to rotate relative to the other of the carrier or the case about a rotational axis, wherein the one of the carrier or the case includes a main body portion and a flange portion connected to the main body portion, wherein the main bearing is pressed in an axial direction parallel to the rotational axis between the main body portion and the other of the carrier or the case, and wherein the sealing member is pressed in the axial direction between the flange portion and the other of the carrier or the case.
(2) In the speed reducer of item (1), the other of the carrier or the case includes a second main body portion and a second flange portion connected to the second main body portion, wherein the main bearing is pressed in the axial direction between the main body portion and the second main body portion, and wherein the sealing member is pressed in the axial direction between the flange portion and the second flange portion.
(3) In the speed reducer of item (1) or item (2), the main bearing includes an inner race, an outer race, and a plurality of rolling elements disposed between the inner race and the outer race, and the sealing member overlaps with the inner race in the axial direction.
(4) In the speed reducer of any one of items (1) to (3), a connection surface between the flange portion and the main body portion is situated on the same side in the axial direction as the sealing member with respect to the main bearing.
(5) In the speed reducer of any one of items (1) to (4), the other of the carrier or the case includes a connecting portion connecting the main body portion and the flange portion, and the connecting portion is positioned inward relative to the sealing member in a radial direction orthogonal to the rotational axis.
(6) In the speed reducer of any one of items (1) to (5), the flange portion includes a restricting portion restricting movement of the sealing member in the axial direction.
(7) A method of assembling a speed reducer, the speed reducer including: a case that includes a case body and a case flange connected to the case body; a carrier that includes a carrier body and a carrier flange connected to the carrier body, the carrier being disposed at least partly in the case; a main bearing disposed between the case and the carrier; and a sealing member sealing between the carrier and the case, the method includes: pressing the main bearing disposed between the carrier body and the case body; connecting the case flange to the case body and connecting the carrier flange to the carrier body; and pressing the sealing member disposed between the carrier flange and the case flange.

An embodiment of the disclosure will be described hereinafter with reference to the appended drawings. From the standpoint of facilitating illustration and understanding, dimensional ratios in the drawings may be modified from those of the actual components.

Terms used to specify geometric conditions such as shape, "parallel," and "orthogonal," as well as values of length and angle, are to be interpreted not in a strictly literal sense, but to include ranges that can be expected to provide similar functionality.

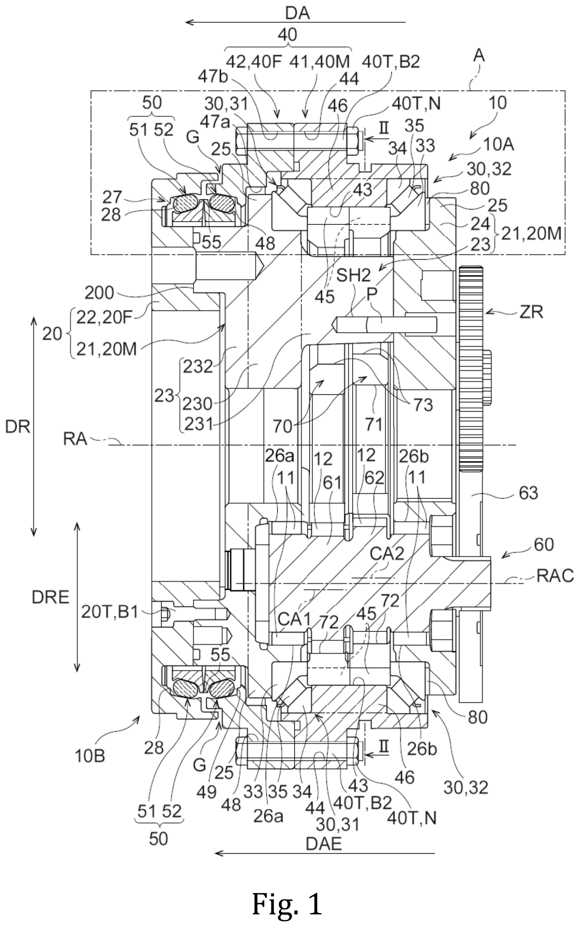

Figs. 1 to 5 are provided for describing one embodiment of the present disclosure. Fig. 1 is a sectional view of a speed reducer 10. The speed reducer 10 reduces rotational motion from the input shaft and outputs the reduced rotational motion. The speed reducer 10 may be connected to the motor. The rotational motion inputted to the speed reducer 10 may be supplied from the motor.

The speed reducer 10 shown in Fig. 1 is an eccentric oscillating speed reducer, as described below. Other than the illustrated example, the speed reducer 10 may also be a planetary gear speed reducer. The speed reducer 10 includes a carrier 20, a main bearing 30, a case 40, and a sealing member 50. The carrier 20 is disposed at least partly inside the case 40. One of the members, either the carrier 20 or the case 40, rotates relative to the other about a rotational axis RA via the main bearing 30. The sealing member 50 seals between the carrier 20 and the case 40.

In the speed reducer 10 of Fig. 1, one of the members, namely one of the carrier 20 or the case 40, may be fixed. The other member, namely the other of the carrier 20 or the case 40, may rotate about the rotational axis RA relative to the fixed member. As one example, in the speed reducer 10, the case 40 may rotate relative to the fixed carrier 20. As another example, in the speed reducer 10, the carrier 20 may rotate relative to the fixed case 40.

In the speed reducer 10 of Fig. 1, the main bearing 30 is held on the carrier 20. The case 40 is held on the main bearing 30. In the speed reducer 10, when a given component is held on another component, the given component is held at a radially outer position relative to the other component in a radial direction DR orthogonal to the rotational axis RA. The radially outer position in the radial direction DR refers to a direction away from the rotational axis RA in the radial direction DR. The radially inner position in the radial direction DR refers to a direction approaching the rotational axis RA in the radial direction DR.

The speed reducer 10 of Fig. 1 includes a crankshaft 60 and an external gear 70. The crankshaft 60 is supported by the case 40 so as to be rotatable around a rotation axis RAC relative to the case 40. The external gear 70 is driven by the rotation of the crankshaft 60 relative to the case 40. In the illustrated speed reducer 10, the carrier 20 rotates about the rotation axis RA relative to the case 40 by the external gear 70 being driven. In the illustrated speed reducer 10, the rotation of the carrier 20 relative to the case 40 is outputted as a rotational motion. Thus, the carrier 20 shown serves as an output shaft of the speed reducer 10. In the illustrated speed reducer 10, instead of the carrier 20, the case 40 may serve as the output shaft of the speed reducer 10.

The carrier 20 shown in Fig. 1 includes a carrier body 21 and a carrier flange 22 connected to the carrier body 21 in an axial direction DA. The carrier body 21 may also be referred to as a main body portion 20M of the carrier 20. The carrier flange 22 may also be referred to as a flange portion 20F of the carrier 20. It is noted that the axial direction DA is a direction parallel to the aforementioned rotational axis RA.

In the carrier 20 shown in Fig. 1, the carrier body 21 and the carrier flange 22 are connected to each other by a bolt B1. The carrier body 21 and the carrier flange 22, which are connected by the bolt B1, are restricted from moving relative to each other. The carrier body 21 and the carrier flange 22 may be connected by a plurality of the bolts B1 arranged at intervals in a circumferential direction DC. The bolt B1 may also be referred to as a connecting portion 20T of the carrier 20. The connecting portion 20T is a member that connects the carrier body 21 and the carrier flange 22. It is noted that the circumferential direction DC refers to a circumferential direction about the rotational axis RA.

The bolt B1 (connecting portion 20T) shown in Fig. 1 is positioned inward in the radial direction DR relative to the sealing member 50. With the configuration of the illustrated speed reducer 10, the connecting portion 20T is arranged so as to suppress outward protrusion in the radial direction DR at the portion where it is disposed, thereby preventing an increase in the size of the speed reducer 10 in the radial direction DR.

In Fig. 1 and Figs. 3 to 5, the axial direction DA is indicated by the arrow. In each figure, the tip of the arrow indicating the axial direction DA corresponds to a first side of the axial direction DA. The base of the arrow indicating the axial direction DA corresponds to a second side of the axial direction DA.

The case 40 shown in Fig. 1 includes a case body 41 and a case flange 42 connected to the case body 41 in the axial direction DA. The case body 41 may also be referred to as a main body portion 40M of the case 40. The case flange 42 may also be referred to as a flange portion 40F of the case 40. In the case 40 shown in Fig. 1, the case body 41 and the case flange 42 are connected to each other by a bolt B2 and a nut N. The case body 41 and the case flange 42, which are connected by the bolt B2 and the nut N, are restricted from moving relative to each other. The case body 41 and the case flange 42 may be connected by a plurality of bolts B2 arranged at intervals in the circumferential direction DC. The bolt B2 and the nut N may be referred to as a connecting portion 40T of the case 40. The connecting portion 40T is a member that connects the case body 41 and the case flange 42.

When the main body portion 20M of the carrier 20 and the main body portion 40M of the case 40 are described together, the main body portion 20M of the carrier 20 may be referred to as a first main body portion 20M. The main body portion 40M of the case 40 may also be referred to as a second main body portion 40M. Similarly, when the flange portion 20F of the carrier 20 and the flange portion 40F of the case 40 are described together, the flange portion 20F of the carrier 20 may be referred to as a first flange portion 20F. The flange portion 40F of the case 40 may also be referred to as a second flange portion 40F.

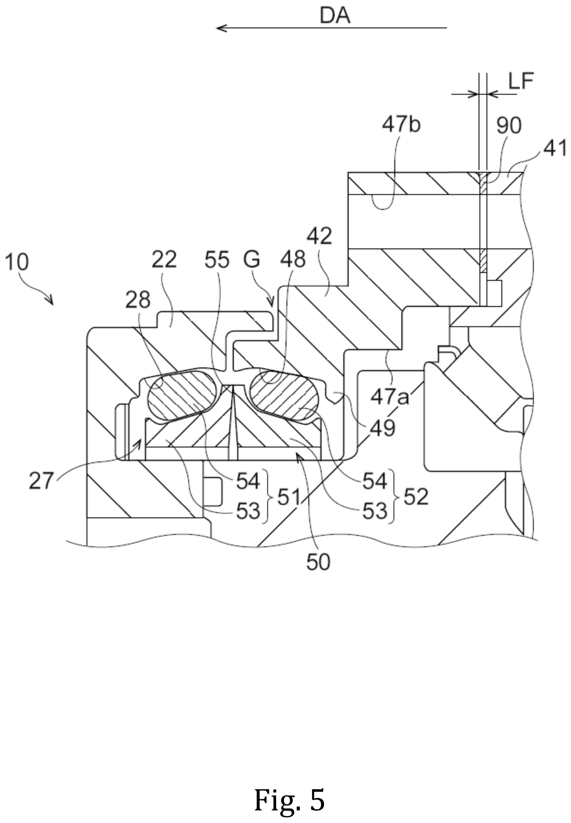

In the speed reducer 10 of Fig. 1, the carrier body 21, the case body 41, the main bearing 30, the crankshaft 60, the external gear 70, and a spacer 80 described later form a speed reducer main body 10A. In the illustrated speed reducer 10, a speed reducer cover 10B includes the carrier flange 22, the case flange 42, and the sealing member 50. The speed reducer cover 10B may include a spacer 90, which will be described later with reference to Fig. 5. The speed reducer 10 includes the speed reducer main body 10A and the speed reducer cover 10B.

In the speed reducer 10 of Fig. 1, a gap G is provided between the carrier 20 and the case 40. The carrier 20 is at least partly disposed inside the case 40 with the gap G formed between the carrier 20 and the case 40. The gap G shown in Fig. 1 is provided between the carrier flange 22 and the case flange 42. The gap G opens in the axial direction DA. The gap G is situated on the outer side of the sealing member 50 in the radial direction DR. The gap G shown in Fig. 1 includes a portion extending in the axial direction DA and a portion extending in the radial direction DR.

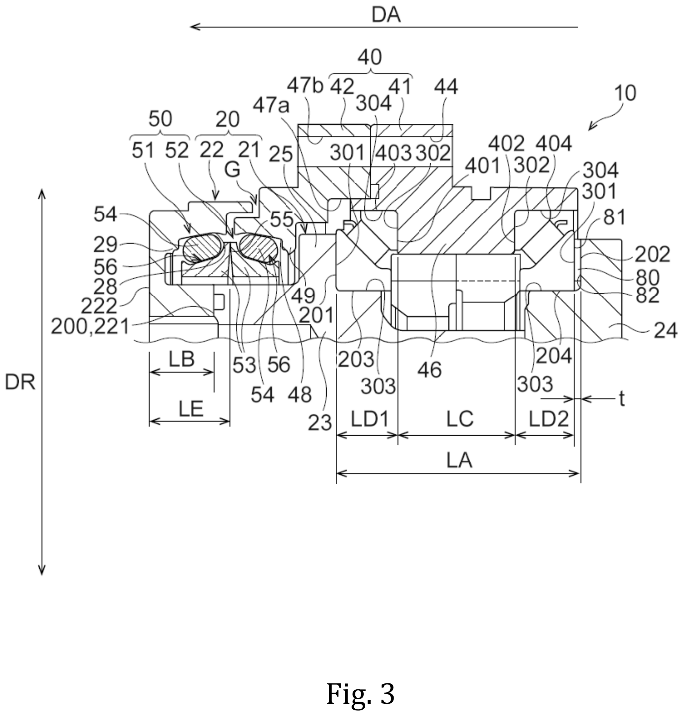

The carrier 20 shown in Fig. 3 includes, in the carrier body 21, a first carrier surface 201 and a second carrier surface 202 that are spaced apart from each other in the axial direction DA. Each of the first carrier surface 201 and the second carrier surface 202 is a circumferential surface facing the axial direction DA. The first carrier surface 201 and the second carrier surface 202 are separated by a distance LA in the axial direction DA. The illustrated carrier 20 is connected to the first main bearing 31 on its first carrier surface 201.

The carrier 20 shown in Fig. 3 includes, in the carrier body 21, a third carrier surface 203 and a fourth carrier surface 204 that are spaced apart from each other in the axial direction DA. Each of the third carrier surface 203 and the fourth carrier surface 204 is a circumferential surface facing the radial direction DR. The third carrier surface 203 and the fourth carrier surface 204 are spaced apart in the radial direction DR. The carrier 20 is connected to the main bearing 30 at its third carrier surface 203 from the inner side in the radial direction DR. The carrier 20 is connected to the main bearing 30 at the fourth carrier surface 204 from the outer side in the radial direction DR.

The carrier body 21 shown in Fig. 1 includes a carrier base 23 and a carrier plate 24 connected to the carrier base 23 in the axial direction DA. The carrier plate 24 is connected to the carrier base 23 from the side opposite to the carrier flange 22 in the axial direction DA. The carrier base 23 is disposed between the carrier flange 22 and the carrier plate 24 in the axial direction DA. The illustrated carrier base 23 and carrier plate 24 are restricted from moving relative to each other by a pin P. The carrier base 23 and the carrier plate 24 may be restricted from moving relative to each other by a plurality of the pins P arranged in the circumferential direction DC. Alternatively, the carrier base 23 and the carrier plate 24 may be restricted from moving relative to each other by various fastening means such as bolts, instead of the illustrated configuration.

The carrier body 21 shown in Fig. 1 includes a protruding portion 25 that protrudes outward in the radial direction DR. The outer diameter of the carrier body 21 at the protruding portion 25 is greater than the outer diameter of the carrier body 21 at portions other than the protruding portion 25. The illustrated carrier body 21 includes two protruding portions 25 that are spaced apart from each other. One of the two protruding portions 25 is formed in the carrier base 23. The protruding portion 25 in the carrier base 23 provides the first carrier surface 201. The other of the two protruding portions 25 is formed in the carrier plate 24. The protruding portion 25 in the carrier plate 24 provides the second carrier surface 202. In the speed reducer 10 of Fig. 1, the main bearing 30 is situated between the two protruding portions 25 in the axial direction DA.

In the carrier body 21 shown in Fig. 1, one of the carrier base 23 or the carrier plate 24 is pressed in the axial direction DA toward the other of the carrier base 23 or the carrier plate 24 by a pin P. As the carrier base 23 and the carrier plate 24 are pressed toward each other by the pin P, the first carrier surface 201 and the second carrier surface 202 in the illustrated carrier body 21 are urged to move closer to each other in the axial direction DA. As a result, the illustrated carrier body 21 presses the main bearing 30 in the axial direction DA.

In the carrier body 21 shown in Fig. 1, the carrier base 23 is provided with a first through-hole 26a that penetrates the carrier base 23 in the axial direction DA. The carrier plate 24 is provided with a second through-hole 26b that penetrates the carrier plate 24 in the axial direction DA. The first through-hole 26a and the second through-hole 26b are aligned with each other in the axial direction DA.

In the first through-hole 26a and the second through-hole 26b shown in Fig. 1, a first bearing 11 is disposed in each. The speed reducer 10 includes the first bearing 11 disposed in the first through-hole 26a and the first bearing 11 disposed in the second through-hole 26b. The crankshaft 60 is supported by the carrier body 21 via the first bearing 11. Thus, the crankshaft 60 supported by the carrier body 21 is rotatable relative to the carrier body 21 about the rotational axis RAC. The rotational axis RAC shown in Fig. 1 extends parallel to the axial direction DA.

The carrier base 23 shown in Fig. 1 includes a base plate portion 230, a first protruding portion 231, and a second protruding portion 232. The first protruding portion 231 protrudes from the base plate portion 230 toward one side in the axial direction DA. The second protruding portion 232 protrudes from the base plate portion 230 toward the other side in the axial direction DA. The base plate portion 230 shown in Fig. 1 includes a portion positioned between the first protruding portion 231 and the second protruding portion 232 in the axial direction DA. In the carrier base 23 shown in Fig. 1, the base plate portion 230, the first protruding portion 231, and the second protruding portion 232 are integrally formed.

The base plate portion 230 shown in Fig. 1 is a disc-shaped member. The carrier base 23 includes the above-described protruding portion 25 in the base plate portion 230. Accordingly, the carrier base 23 has the first carrier surface 201 of the carrier 20 at the base plate portion 230. The carrier base 23 also has the third carrier surface 203 of the carrier 20 at the base plate portion 230.

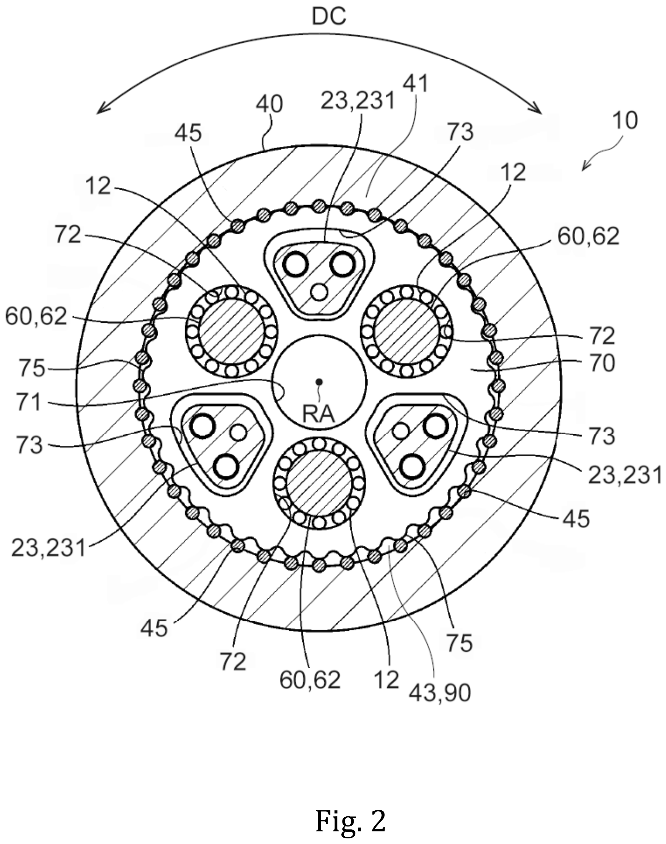

The carrier base 23 shown in Figs. 1 and 2 includes a plurality of the first protruding portions 231. In the carrier base 23, the plurality of first protruding portions 231 protrude from the base plate portion 230 toward the second side in the axial direction DA. Referring to Fig. 1, when the carrier base 23 and the carrier plate 24 are connected to each other, each first protruding portion 231 is situated between the carrier plate 24 and the base plate portion 230 in the axial direction DA. Fig. 2 shows the three first protruding portions 231 arranged at intervals in the circumferential direction DC. Each of the three first protruding portions 231 is provided with a hole SH2 for accommodating the above-described pin P. The hole SH2 opens toward the carrier plate 24 in the axial direction DA.

In the carrier base 23 shown in Fig. 1, the second protruding portion 232 forms a connection surface 200 between the carrier body 21 and the carrier flange 22. The connection surface 200 is a circumferential surface orthogonal to the axial direction DA. In the carrier 20 shown in Figs. 1 and 3, the connection surface 200 is situated on the first side relative to the main bearing 30 in the axial direction DA.

The carrier flange 22 shown in Fig. 1 is a disk-shaped member having a first surface 221 and a second surface 222. The first surface 221 and the second surface 222 face each other in the axial direction DA. The carrier flange 22 is connected to the carrier body 21 in the axial direction DA at the first surface 221. The second surface 222 is located farther from the case 40 in the axial direction DA than the first surface 221. The head of the bolt B1 that connects the carrier body 21 and the carrier flange 22 contacts the second surface 222. As shown in Fig. 3, the first surface 221 and the second surface 222 are spaced apart by a distance LB in the axial direction DA.

The carrier flange 22 shown in Figs. 1 and 3 includes an annular recess 27 for at least partly accommodating the sealing member 50. The recess 27 opens in the axial direction DA toward the carrier body 21. The dimension of the illustrated recess 27 in the radial direction DR gradually decreases as it extends away from the carrier body 21 in the axial direction DA. In other words, the dimension of the recess 27 in the radial direction DR gradually decreases as the recess 27 approaches the second surface 222 in the axial direction DA.

The carrier flange 22 shown in Figs. 1 and 3 includes a pressing surface 28 in the recess 27, which presses the sealing member 50 from the outer side in the radial direction DR. The illustrated pressing surface 28 is inclined with respect to the axial direction DA. In the illustrated carrier flange 22, the distance between the inclined pressing surface 28 and the rotational axis RA gradually decreases as the carrier flange 22 extends away from the carrier body 21 in the axial direction DA.

The carrier flange 22 shown in Fig. 3 includes a restricting portion 29 that restricts axial movement of the sealing member 50 in the axial direction DA. The restricting portion 29 is disposed, in the axial direction DA, between the second surface 222 of the carrier flange 22 and the contact position between the carrier flange 22 and the sealing member 50. At the restricting portion 29, the carrier flange 22 protrudes inward in the radial direction DR relative to the pressing surface 28.

The case body 41 shown in Fig. 1 is provided with a first hole 43 that penetrates the case body 41 in the axial direction DA. The first hole 43 opens at each axial end of the case flange 42. The case flange 42 defines a space for at least partly accommodating the carrier 20, the main bearing 30, the crankshaft 60, and the external gear 70.

As shown in Fig. 1, the case body 41 may have a plurality of second holes 44 arranged in the circumferential direction DC. Each of the second holes 44 is positioned outward in the radial direction DR relative to the first hole 43. Each of the second holes 44 penetrates the case body 41 in the axial direction DA. In the illustrated speed reducer 10, a shaft portion of the bolt B2, which connects the case body 41 and the case flange 42, may be received in the second hole 44.

The case body 41 shown in Figs. 1 and 2 includes a plurality of internal gear pins 45 held on its inner circumferential surface. A plurality of pin grooves are formed on the inner circumferential surface of the case body 41, arranged in the circumferential direction DC. Each of the pin grooves extends in the axial direction DA. One of the plurality of internal gear pins 45 is accommodated in one of the pin grooves. In the accommodated state, the internal gear pin 45 is rotatable relative to the case body 41 about a rotational axis extending in the axial direction DA.

The case body 41 shown in Fig. 1 includes an inward protruding portion 46 extending in the radial direction DR. The inward protruding portion 46 is a part of the case body 41 in the axial direction DA. At the inward protruding portion 46, the case body 41 extends further inward in the radial direction DR relative to other portions. The first hole 43 is reduced in diameter by the inward protruding portion 46. In other words, the outer diameter of the first hole 43 is decreased by the inward protruding portion 46. The inward protruding portion 46 extends in the circumferential direction DC. The inward protruding portion 46 has a dimension LC in the axial direction DA.

At the inward protruding portion 46, the case body 41 shown in Fig. 1 forms a first case surface 401 and a second case surface 402 of the case 40. The first case surface 401 and the second case surface 402 are spaced apart from each other in the axial direction DA. Each of the first case surface 401 and the second case surface 402 is an annular surface facing the axial direction DA.

In the speed reducer 10 of Fig. 1, the first case surface 401 and the second case surface 402 are disposed between the first carrier surface 201 and the second carrier surface 202 in the axial direction DA. In the case 40 shown in Fig. 1, the first case surface 401 and the second case surface 402 serve as surfaces for restricting axial movement of the main bearing 30 in the axial direction DA. The first case surface 401 and the second case surface 402 also serve as surfaces for pressing the main bearing 30 in the axial direction DA.

As shown in Fig. 1, the portions of the case body 41, other than the inward protruding portion 46, form a third case surface 403 and a fourth case surface 404 of the case 40. The third case surface 403 and the fourth case surface 404 are spaced apart from each other in the axial direction DA. Each of the third case surface 403 and the fourth case surface 404 is an annular surface facing the radial direction DR. In the case 40 shown in Fig. 1, the third case surface 403 and the fourth case surface 404 serve as surfaces for restricting outward movement of the main bearing 30 in the radial direction DR.

The case flange 42 shown in Fig. 1 is connected to the case body 41. The case flange 42 is disposed between the case body 41 and the carrier flange 22 in the axial direction DA. The case flange 42 is provided with a first hole 47a that penetrates the case flange 42 in the axial direction DA. In the illustrated configuration, the case flange 42 accommodates a part of the carrier body 21 and a part of the sealing member 50 in the first hole 47a. The case flange 42 provided with the first hole 47a has an inner circumferential surface centered on the rotational axis RA.

The case flange 42 shown in Fig. 1 is provided with a plurality of second holes 47b arranged in the circumferential direction DC. The second holes 47b are positioned outward in the radial direction DR relative to the first hole. The second holes 47b penetrate the case flange 42 in the axial direction DA. As shown in Fig. 1, the second holes 47b are aligned in the axial direction DA with the second holes 44 in the case body 41. The second holes 47b formed in the case flange 42 are adjacent to the second holes 44 formed in the case body 41 in the axial direction DA. Thus, in the illustrated case 40, the shaft portion of bolt B2, which connects the case body 41 and the case flange 42, is able to be inserted in the second hole 47b of the case flange 42 and the second hole 44 of the case body 41.

In the case flange 42 shown in Figs. 1 and 3, a portion of the inner circumferential surface serves as a pressing surface 48 that presses the sealing member 50 from the outer side in the radial direction DR. The case flange 42 includes the pressing surface 48 that contacts the sealing member 50. The illustrated pressing surface 48 is inclined with respect to the axial direction DA. In the illustrated case flange 42, the distance from the inclined pressing surface 48 to the rotational axis RA gradually decreases as it approaches the case body 41 in the axial direction DA.

The case flange 42 shown in Fig. 3 includes a restricting portion 49 that restricts movement of the sealing member 50 in the axial direction DA. The illustrated restricting portion 49 is disposed between the protruding portion 25 of the carrier base 23 and the contact position between the case flange 42 and the sealing member 50 in the axial direction DA. At the restricting portion 49, the case flange 42 protrudes inward in the radial direction DR relative to the pressing surface 48.

The speed reducer 10 of Fig. 1 includes a plurality of the main bearings 30. Each main bearing 30 is an annular member centered on the rotational axis RA. As the plurality of main bearings 30, the speed reducer 10 of Fig. 1 includes the first main bearing 31 and a second main bearing 32, which are spaced apart from each other in the axial direction DA.

The main bearing 30 shown in Fig. 1 includes a first bearing surface 301 and a second bearing surface 302, which are spaced apart from each other in the axial direction DA. Each of the first bearing surface 301 and the second bearing surface 302 faces in the axial direction DA. The illustrated main bearing 30 is connected to the carrier 20 at the first bearing surface 301. The main bearing 30 is connected to the case 40 at the second bearing surface 302.

The main bearing 30 shown in Fig. 1 includes an inner circumferential surface 303 and an outer circumferential surface 304, which are spaced apart from each other in the radial direction DR. Each of the inner circumferential surface 303 and the outer circumferential surface 304 faces in the radial direction DR. The illustrated main bearing 30 is connected to the carrier 20 at the inner circumferential surface 303 from the outer side in the radial direction DR. The main bearing 30 is connected to the case body 41 at the outer circumferential surface 304 from the inner side in the radial direction DR.

Each of the plurality of main bearings 30 shown in Fig. 1 includes an inner race 33, an outer race 34, and a rolling element 35 disposed between the inner race 33 and the outer race 34. The inner race 33 and the outer race 34 are each annular members extending in the circumferential direction DC. In the speed reducer 10 of Fig. 1, the inner race 33 is fixed to the carrier 20. The outer race 34 is fixed to the case 40. One of the inner race 33 or the outer race 34 is rotatable about the rotational axis RA relative to the other via the rolling element 35 disposed therebetween. The main bearing 30 may include a plurality of the rolling elements 35 arranged in the circumferential direction DC.

In the main bearing 30 shown in Figs. 1 and 3, the inner race 33 includes a portion that overlaps with the outer race 34 in the axial direction DA. The outer race 34 includes a portion that overlaps with the inner race 33 in the axial direction DA. The rolling element 35 includes a portion disposed between the inner race 33 and the outer race 34 in the axial direction DA. The inner race 33 provides the first bearing surface 301 and the inner circumferential surface 303 of the main bearing 30. The outer race 34 provides the second bearing surface 302 and the outer circumferential surface 304 of the main bearing 30.

In the speed reducer 10 of Fig. 3, the first main bearing 31 is disposed between the first carrier surface 201 and the first case surface 401 in the axial direction DA. The second main bearing 32 is disposed between the second carrier surface 202 and the second case surface 402 in the axial direction DA. The first bearing surface 301 of the first main bearing 31 contacts the first carrier surface 201 from the second side in the axial direction DA. The second bearing surface 302 of the first main bearing 31 contacts the first case surface 401 from the first side in the axial direction DA. The second bearing surface 302 of the second main bearing 32 contacts the second case surface 402 from the second side in the axial direction DA.

In the speed reducer 10 of Fig. 3, the first main bearing 31 is disposed between the third carrier surface 203 and the third case surface 403 in the radial direction DR. The second main bearing 32 is disposed between the fourth carrier surface 204 and the fourth case surface 404 in the radial direction DR. The inner circumferential surface 303 of the first main bearing 31 contacts the third carrier surface 203 from the outer side in the radial direction DR. The outer circumferential surface 304 of the first main bearing 31 contacts the third case surface 403 from the inner side in the radial direction DR. The inner circumferential surface 303 of the second main bearing 32 contacts the fourth carrier surface 204 from the outer side in the radial direction DR. The outer circumferential surface 304 of the second main bearing 32 contacts the fourth case surface 404 from the inner side in the radial direction DR.

The main bearing 30 may be a tapered roller bearing or an angular contact bearing. In Fig. 1, the main bearing 30 is pressed in the axial direction DA between the carrier 20 and the case 40. More specifically, the main bearing 30 is pressed in the axial direction DA between the carrier body 21 and the case body 41. The first main bearing 31 is pressed in the axial direction DA between the protruding portion 25 of the carrier base 23 and the inward protruding portion 46 of the case body 41. The second main bearing 32 is axially pressed in the axial direction DA between the protruding portion 25 of the carrier plate 24 and the inward protruding portion 46 of the case body 41. Although the main bearing 30 is exemplified as a tapered roller bearing or an angular contact bearing, it is not limited thereto, and a general bearing may be employed.

The sealing member 50 shown in Figs. 1 and 2 seals the space between the carrier 20 and the case 40. The sealing member 50 suppresses leakage of lubricating oil stored between the carrier 20 and the case 40. The sealing member 50 prevents ingress of foreign matter such as dust, sand, and unclean water into the space between the carrier 20 and the case 40, and prevents contamination of the lubricating oil by such foreign matter. The sealing member 50 also suppresses lubrication failure in the speed reducer 10 caused by contaminated oil.

The sealing member 50 shown in Figs. 1 and 3 is situated on the first side relative to the main bearing 30 in the axial direction DA, similarly to the aforementioned connection surface 200. That is, the connection surface 200 between the carrier body 21 and the carrier flange 22 is situated on the same side as the sealing member 50 with respect to the main bearing 30 in the axial direction DA.

The sealing member 50 shown in Figs. 1 and 3 overlaps with the main bearing 30 in the axial direction DA. In other words, the sealing member 50 is disposed in the same region as the main bearing 30 in the radial direction DR. More specifically, the sealing member 50 is disposed between the inner circumferential surface 303 and the outer circumferential surface 304 of the main bearing 30 in the radial direction DR. In particular, the illustrated sealing member 50 overlaps with the inner race 33 of the main bearing 30 in the axial direction DA. In the speed reducer 10 in which the main bearing 30, especially the inner race 33, and the sealing member 50 overlap in the axial direction DA, it is possible to suppress outward protruding portion 46 in the radial direction DR at the portion where the sealing member 50 is disposed, thereby suppressing an increase in size of the speed reducer 10 in the radial direction DR.

The sealing member 50 shown in Figs. 1 and 3 includes a first sealing member 51 and a second sealing member 52 that overlaps the first sealing member 51 in the axial direction DA. The first sealing member 51 and the second sealing member 52 are in contact with each other at an annular contact surface 55. The first sealing member 51 and the second sealing member 52 are spaced apart from the carrier body 21 in the radial direction DR. In the illustrated speed reducer 10, the first sealing member 51 is disposed in the recess 27 formed in the carrier flange 22. The second sealing member 52 is at least partly disposed in the first hole 47a formed in the case flange 42. The contact surface 55 is spaced from the second surface 222 of the carrier flange 22 by a distance LE in the axial direction DA.

The first sealing member 51 and the second sealing member 52 illustrated in Figs. 1 and 3 each include a first ring 53 and a second ring 54 held on the first ring 53. Each of the first ring 53 and the second ring 54 has an annular shape. The illustrated sealing member 50 includes the two first rings 53 and two second rings 54. The illustrated first sealing member 51 and second sealing member 52 have the same configuration. Alternatively, the first sealing member 51 and the second sealing member 52 may have different configurations from each other, contrary to the illustrated example.

As shown in Figs. 1 and 3, a recess 56 for accommodating the second ring 54 is provided on the outer circumferential surface of the first ring 53. The first ring 53 is recessed radially inward in the radial direction DR at the recess 56. Due to the provision of the recess 56, both ends of the first ring 53 in the axial direction DA shown in Fig. 3 protrude outward in the radial direction DR. By such protrusions at both axial ends, the first ring 53 may restrict axial movement of the second ring 54 relative to the first ring 53 in the axial direction DA.

In the first sealing member 51 and the second sealing member 52 shown in Figs. 1 and 3, the second ring 54 is disposed on the recess 56 of the first ring 53. The first ring 53 supports the second ring 54 that is pressed thereagainst. From the viewpoint of stably supporting the second ring 54, the first ring 53 may be made of a metal such as chrome molybdenum steel.

In the speed reducer 10 shown in Figs. 1 and 3, the second ring 54 of the first sealing member 51 is disposed between the carrier flange 22 and the first ring 53 in the radial direction DR. The second ring 54 of the second sealing member 52 is disposed between the case flange 42 and the first ring 53 in the radial direction DR. The second ring 54 includes a material that is compressibly deformable. In the illustrated first sealing member 51, the second ring 54 is compressibly deformed between the carrier flange 22 and the first ring 53. In the illustrated second sealing member 52, the second ring 54 is compressibly deformed between the case flange 42 and the first ring 53. The second ring 54 may include rubber as the compressibly deformable material.

The sealing member 50 shown in Figs. 1 and 3 is pressed in the axial direction DA between the carrier 20 and the case 40. In particular, the sealing member 50 is pressed in the axial direction DA between the carrier flange 22 and the case flange 42.

The carrier flange 22 shown in Figs. 1 and 3 presses the first sealing member 51 at the pressing surface 28 of the recess 27. The carrier flange 22 presses the first sealing member 51 in a direction orthogonal to the pressing surface 28. In the first sealing member 51, the second ring 54 is compressibly deformed by being pressed by the carrier flange 22.

As described above, the pressing surface 28 is inclined with respect to the axial direction DA. Due to the inclination of the pressing surface 28, the force by which the carrier flange 22 presses the first sealing member 51 includes a component that presses the first sealing member 51 in the radial direction DR and a component that presses the first sealing member 51 in the axial direction DA. The component that presses the first sealing member 51 in the radial direction DR presses the first sealing member 51 inward in the radial direction DR. The component that presses the first sealing member 51 in the axial direction DA presses the first sealing member 51 toward the second sealing member 52 in the axial direction DA. Thus, the carrier flange 22 presses the first sealing member 51 toward the second sealing member 52 in the axial direction DA.

As also described above, the distance between the inclined pressing surface 28 and the rotational axis RA in the radial direction DR gradually decreases as it approaches the second surface 222. Accordingly, in the illustrated carrier flange 22, by positioning the contact point with the first sealing member 51 closer to the second surface 222, the amount of deformation of the second ring 54 in the first sealing member 51 and the pressing force applied to the first sealing member 51 increase. An increase in the pressing force applied to the first sealing member 51 results in an increased force by which the first sealing member 51 presses the second sealing member 52 in the axial direction DA.

The case flange 42 shown in Figs. 1 and 3 presses the second sealing member 52 at the pressing surface 48. The case flange 42 presses the second sealing member 52 in a direction orthogonal to the pressing surface 48. In the second sealing member 52, the second ring 54 is compressibly deformed by being pressed by the case flange 42.

As described above, the pressing surface 48 of the case flange 42 is inclined with respect to the axial direction DA. Due to the inclination of the pressing surface 48, the force by which the case flange 42 presses the second sealing member 52 includes a component that presses the second sealing member 52 in the radial direction DR and a component that presses the second sealing member 52 in the axial direction DA. The component that presses the second sealing member 52 in the radial direction DR presses the second sealing member 52 inward in the radial direction DR. The component that presses the second sealing member 52 in the axial direction DA presses the second sealing member 52 toward the first sealing member 51 in the axial direction DA. Thus, the case flange 42 presses the second sealing member 52 toward the first sealing member 51 in the axial direction DA.

As also described above, the distance between the inclined pressing surface 48 and the rotational axis RA in the radial direction DR gradually decreases as it approaches the restricting portion 49. Accordingly, in the illustrated case flange 42, by positioning the contact point with the second sealing member 52 closer to the restricting portion 49, the amount of deformation in the second ring 54 of the second sealing member 52 and the force applied to the second sealing member 52 are increased. An increase in the pressing force applied to the second sealing member 52 results in an increased force by which the second sealing member 52 presses the first sealing member 51 in the axial direction DA.

With the above-described configuration, in the sealing member 50 shown in Figs. 1 and 3, one of the first sealing member 51 or the second sealing member 52 is pressed toward the other of the first sealing member 51 or the second sealing member 52 in the axial direction DA. As described above, the sealing member 50 is pressed in the axial direction DA between the carrier flange 22 and the case 40. The contact surface 55 serves as a surface on which the first sealing member 51 presses the second sealing member 52 in the axial direction DA, and also as a surface on which the second sealing member 52 presses the first sealing member 51 in the axial direction DA. The contact surface 55 is situated between the contact point of the first sealing member 51 with the carrier flange 22 and the contact point of the second sealing member 52 with the case flange 42 in the axial direction DA. In the illustrated speed reducer 10, the contact surface 55 is positioned, in the axial direction DA, between the pressing surface 28 of the carrier flange 22 and the pressing surface 48 of the case flange 42.

As for the components of the speed reducer, dimensional variations may occur in the carrier and the case, which are manufactured as the components. In the carrier 20 shown in Figs. 1 and 3, for example, variations may occur in the inclination angle of the pressing surface 28 with respect to the axial direction DA, which presses the first sealing member 51. In the case 40 shown in Figs. 1 and 3, for example, variations may occur in the inclination angle of the pressing surface 48 with respect to the axial direction DA, which presses the second sealing member 52. The variations in the inclination angle of the pressing surface 28 in the carrier 20 and in the inclination angle of the pressing surface 48 in the case 40 may result in changes in the pressure applied to the sealing member 50 in the axial direction DA.

In the speed reducer 10 shown in Figs. 1 and 3, the pressure applied to the sealing member 50 in the axial direction DA can be adjusted by adjusting the distance LB between the first surface 221 and the second surface 222 of the carrier flange 22. For example, the distance LB can be reduced in order to increase the pressure by which the carrier flange 22 presses the sealing member 50 in the axial direction DA.

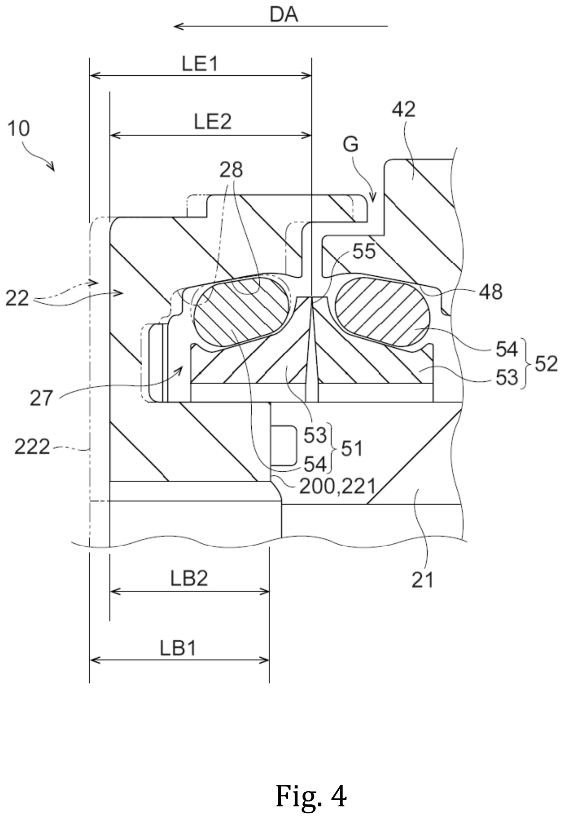

Fig. 4 is a diagram for explaining the mechanism by which the carrier flange 22 increases the pressure applied to the sealing member 50 in the axial direction DA. In Fig. 4, the distance LB between the first surface 221 and the second surface 222 is reduced from LB1 to LB2. The reduction in the distance LB also results in a decrease in the distance LE between the second surface 222 and the contact surface 55 of the sealing member 50 as shown in Fig. 5. In Fig. 4, the distance LE between the second surface 222 and the contact surface 55 decreases from LE1 to LE2. Meanwhile, in Fig. 4, the position of the sealing member 50 remains unchanged despite the reduction in distance LB. Thus, in Fig. 4, the carrier flange 22 is displaced toward the second side in the axial direction DA relative to the sealing member 50 as a result of the reduction in the distance LB.

In Fig. 4, as the carrier flange 22 is displaced, the contact position between the pressing surface 28 and the sealing member 50 approaches the second surface 222 of the carrier flange 22. As described above, the force by which the carrier flange 22 presses the first sealing member 51 increases as the contact position with the first sealing member 51 approaches the second surface 222. As a result, the pressure by which the carrier flange 22 presses the sealing member 50 in the axial direction DA increases with a reduction in the distance LB between the first surface 221 and the second surface 222 of the carrier flange 22.

In the speed reducer 10 shown in Figs. 1 and 3, the pressure by which the carrier flange 22 presses the sealing member 50 in the axial direction DA can be adjusted by adjusting the distance LB between the first surface 221 and the second surface 222 of the carrier flange 22. The distance LB may be adjusted, for example, by polishing the first surface 221 of the carrier flange 22.

In the speed reducer 10 shown in Figs. 1 and 3, the pressure applied to the sealing member 50 in the axial direction DA can also be adjusted by adjusting the dimensions of the case 40, specifically the distance between the case body 41 and the case flange 42. For example, in order to increase the pressure by which the case flange 42 presses the sealing member 50 in the axial direction DA, the axial distance LF between the case body 41 and the case flange 42 can be increased.

Fig. 5 also illustrates the mechanism by which the case flange 42 increases the pressure applied to the sealing member 50 in the axial direction DA. The speed reducer 10 of Fig. 5 includes a spacer 90 disposed between the case body 41 and the case flange 42. The spacer 90 is an annular member centered on the rotational axis RA. The spacer 90 is provided with through-holes at positions overlapping, in the axial direction DA, with the second hole 44 of the case body 41 and the second hole 47b of the case flange 42. In Fig. 5, the case body 41 and the case flange 42 are spaced apart in the axial direction DA by an amount corresponding to a thickness DF of the spacer 90, as a result of being connected via the spacer 90. Meanwhile, in Fig. 5, even though the case body 41 and the case flange 42 are separated from each other, the position of the sealing member 50 remains unchanged. Consequently, in Fig. 5, the case flange 42 is displaced toward the first side in the axial direction DA relative to the sealing member 50.

In Fig. 5, as the case flange 42 is displaced, the contact position between the pressing surface 48 and the sealing member 50 approaches the restricting portion 49 of the case flange 42. As described above, the force by which the case flange 42 presses the second sealing member 52 increases as the contact position with the second sealing member 52 approaches the restricting portion 49. As a result, the pressure by which the case flange 42 presses the sealing member 50 in the axial direction DA increases by disposing the spacer 90 between the case body 41 and the case flange 42.

The crankshaft 60 shown in Fig. 1 includes a first eccentric member 61 and a second eccentric member 61 arranged in the axial direction DA. Each of the first eccentric member 61 and the second eccentric member 61 has a cylindrical shape with an axial direction DAE parallel to the axial direction DA. A center axis CA1 of the first eccentric member 61 and a center axis CA2 of the second eccentric member 62 are offset relative to the rotational axis RAC of the crankshaft 60 in a radial direction DRE perpendicular to the axial direction DAE. The center axis CA1 of the first eccentric member 61 is offset relative to the rotation axis RAC of the crankshaft 60 in the direction away from the rotation axis RA in the radial direction DRE. The center axis CA2 of the second eccentric member 62 is offset relative to the rotation axis RAC of the crankshaft 60 in the direction toward the rotation axis RA in the radial direction DRE.

The crankshaft 60 shown in Fig. 1 includes an input gear 63 situated at the end in axial direction DA. The input gear 63 meshes with a gear ZR of the input shaft. The gear ZR and the input gear 63 are spaced apart from each other in the radial direction DR. The illustrated gear ZR and input gear 63 rotate about respective rotational axes that are parallel to the axial direction DA. The rotation of the input shaft is transmitted to the crankshaft 60 through the meshing between the gear ZR and the input gear 63.

The speed reducer 10 of Fig. 1 includes two external gears 70 arranged in the axial direction DA. The two external gears 70 are housed in the case 40. The external gears 70 are disposed between the carrier plate 24 and the base plate portion 230 of the carrier base 23 in the axial direction DA.

The external gear 70 shown in Figs. 1 and 2 has a central hole 71 located at the center thereof. The external gear 70 has external teeth 75 arranged along the outer edge thereof. The external teeth 75 are smaller in number than the internal pins 45. By way of an example, the number of the external teeth 75 is smaller by one than the number of the internal pins 45.

The external gear 70 shown in Figs. 1 and 2 has a plurality of eccentric member insertion holes 72 arranged at intervals in the circumferential direction around the central hole 71. Fig. 2 shows three eccentric member insertion holes 72 arranged in the circumferential direction. Each of the eccentric member insertion holes 72 receives a second bearing 12. The crankshaft 60 is held via the second bearing 12 so as to be rotatable relative to the external gear 70.

The external gear 70 shown in Figs. 1 and 2 has a plurality of columnar portion insertion holes 73 equally spaced in the circumferential direction around the central hole 71. Fig. 2 shows three columnar portion insertion holes 73 arranged in the circumferential direction. In the external gear 70 shown in Fig. 2, the eccentric member insertion holes 72 and the columnar portion insertion holes 73 are arranged alternately in the circumferential direction. In Figs. 1 and 2, each of the columnar portion insertion holes 73 receives the columnar portion 231 of the carrier base portion 23.

The external gear 70 shown in Figs. 1 and 2 has external teeth 75 on the outer circumferential surface thereof. The outer circumferential surface of the external gear 70 including the external teeth 75 contacts the plurality of internal pins 45 of the case 40. The external gear 70, driven by the crankshaft 60, moves relative to the case 40, while contacting the internal tooth pins 45 at the external teeth 75. As described later, the center axis of the external gear 70 moving relative to the case 40 revolves around the rotation axis RA. The movement of the external gear 70 relative to the case 40 is transmitted to the carrier 20, and thus the carrier 20 rotates around the rotation axis RA relative to the case 40.

In the speed reducer 10 shown in Figs. 1 and 3 includes a spacer 80 disposed between the main bearing 30 and the carrier 20. Specifically, the spacer 80 is disposed between the first main bearing 31 and the carrier body 21. More specifically, the spacer 80 is disposed between the first main bearing 31 and the carrier plate 24. The spacer 80 is an annular member having a first spacer surface 81 and a second spacer surface 82. The spacer 80 has a thickness t, defined as the distance between the first spacer surface 81 and the second spacer surface 82 in the axial direction DA. Each of the first spacer surface 81 and the second spacer surface 82 faces in the axial direction DA. The spacer 80 is in contact with a first bearing surface 301 of the main bearing 30 at the first spacer surface 81. The spacer 80 is in contact with the second carrier surface 202 of the carrier 20 at the second spacer surface 82.

In Figs. 1 and 3, the first main bearing 31 is in contact with the first carrier surface 201 of the carrier 20 at the first bearing surface 301. The first main bearing 31 is also in contact with the first case surface 401 of the case 40 at the second bearing surface 302. Thus, the first main bearing 31 is pressed in the axial direction DA toward the inward protruding portion 46 of the case body 41 by the protruding portion 25 of the carrier body 21. Additionally, the first main bearing 31 is pressed in the axial direction DA toward the protruding portion 25 of the carrier body 21 by the inward protruding portion 46 of the case body 41.

In Figs. 1 and 3, the second main bearing 32 is in contact with the first spacer surface 81 of the spacer 80 at the first bearing surface 301. The second main bearing 32 is also in contact with the second case surface 402 of the case 40 at the second bearing surface 302. As a result, the second main bearing 32 is pressed in the axial direction DA toward the inward protruding portion 46 of the case body 41 by the spacer 80 and the carrier body 21 connected to the spacer 80. Additionally, the second main bearing 32 is pressed in the axial direction DA toward the spacer 80 and the carrier body 21 connected thereto by the inward protruding portion 46 of the case body 41.

As for the components of the speed reducer, dimensional variations may occur in the carrier and the case, which are manufactured as the components. Among multiple cases, variations may arise in their dimensions along the axial direction. Among multiple carriers, variations may likewise arise in their dimensions along the axial direction. In the carrier 20 shown in Figs. 1 and 3, for example, variations may occur in the distance LA between the first carrier surface 201 and the second carrier surface 202 in the axial direction DA. In the case 40 shown in Figs. 1 and 3, for example, variations may occur in the dimension LC of the inward protruding portion 46 of the case body 41 in the axial direction DA. Due to such dimensional variations in the carrier 20 and the case 40 along the axial direction DA, the pressure applied to the main bearing 30 in the axial direction DA may vary in the illustrated speed reducer 10.

In the speed reducer 10 shown in Figs. 1 and 3, the pressure applied to the main bearing 30 in the axial direction DA is adjusted by adjusting the thickness t of the spacer 80. In the illustrated speed reducer 10, the placement of the spacer 80 reduces a dimension LD1 of the space for accommodating the first main bearing 31 in the axial direction DA and an axial dimension LD2 of the space for accommodating the second main bearing 32 in the axial direction DA. Meanwhile, in the illustrated speed reducer 10, the axial dimension LC of the inward protruding portion 46 of the case body 41 is less susceptible to changes resulting from the variations in the thickness t of the spacer 80, relative to the above-mentioned dimensions LD1 and LD2.

In the speed reducer 10 shown in Figs. 1 and 3, the pressure applied to the first main bearing 31 in the axial direction DA increases as the distance LD1 between the first carrier surface 201 and the first case surface 401 decreases. Additionally, as the distance LD2 between the second spacer surface 82 and the second case surface 402 decreases, the pressure applied to the second main bearing 32 in the axial direction DA increases. Accordingly, in the illustrated speed reducer 10, an increase in the thickness t of the spacer 80 results in an increase in the pressure applied to the first main bearing 31 and the pressure applied to the second main bearing 32 in the axial direction DA. As a result, in the illustrated speed reducer 10, the pressure applied to the main bearing 30 in the axial direction DA can be adjusted by adjusting the thickness t of the spacer 80.

The following now describes how the speed reducer 10 shown in Figs. 1 to 3 works. A torque from the input shaft (not shown) is transmitted to the input gear 63 of the crankshaft 60 from the gear ZR. The crankshafts 60 rotates around the rotation axis RAC relative to the carrier 20 and the case 40 by the torque transmitted from the input gear 63. In the crankshafts 60 rotating around the rotation axis RAC, the first eccentric member 61 and the second eccentric member 62 rotate eccentrically relative to the carrier 20 and the case 40. The first eccentric member 61 rotates with the center axis CA1 thereof being offset in the radial direction DRE relative to the rotation axis RAC. The second eccentric member 62 rotates with the center axis CA2 thereof being offset in the radial direction DRE relative to the rotation axis RAC.

The eccentric rotation of the first eccentric member 61 and the second eccentric member 61 drives the two external gears 70 respectively. The two external gears 70 shown in Fig. 2 move in the radial direction DR and the circumferential direction DC relative to the case 40 while contacting the internal tooth pins 45 of the case 40 at the outer circumferential surface. Each of the internal tooth pins 45, contacted by the external gears 70, rotates relative to the case body 41 around a rotation axis parallel to the axial direction DA. As described above, the number of external teeth 75 is smaller by one than the number of internal tooth pins 45. As a result, when each of the external gears 70 moves relative to the case 40, the center axis of the external gear 70 moves in the circumferential direction DC around the rotation axis RA while being offset in the radial direction DR relative to the rotation axis RA. In other words, the external gear 70 moving relative to the case 40 revolves around the rotation axis RA. The revolution period of the external gear 70, that is, the time taken by the center axis of the external gear 70 to circle the track extending in the circumferential direction DC, is larger than the rotational period of the crankshafts 60.

The revolution of the external gear 70 is transmitted to the carrier 20 inserted into the columnar portion insertion hole 73. Thus, the carrier 20 rotates around the rotation axis RA relative to the case 40. Since the revolution period of the external gear 70 is larger than the rotational period of the crankshafts 60, the carrier 20 rotates relative to the case 40 at a rotational speed smaller than that of the input shaft. In the carrier 20, the carrier body 21 and the carrier flange 22 connected to the carrier body 21 rotate relative to the case 40. Thus, in the speed reducer 10 shown, the rotational motion of the carrier 20 relative to the case 40 is output as a rotational motion that is reduced in speed compared to the rotational motion input from the input shaft, which is the gear ZR.

In the speed reducer 10 shown in Figs. 1 to 3, the first sealing member 51, which is pressed by the pressing surface 28 of the carrier flange 22, rotates relative to the second sealing member 52 as the carrier 20 rotates relative to the case 40. The first sealing member 51 rotates relative to the second sealing member 52 while forming the contact surface 55 through contact with the second sealing member 52. In the speed reducer 10 shown in Figs. 1 and 3, the sealing member 50 seals between the carrier 20 and the case 40 even when the first sealing member 51 rotates relative to the second sealing member 52, by means of the compressed and deformed second ring 54 and the first and second sealing members 51 and 52 that form the contact surface 55. The first sealing member 51 remains spaced apart from the carrier body 21 in the radial direction DR even while rotating relative to the second sealing member 52. The second sealing member 52 also remains spaced apart from the carrier body 21 in the radial direction DR even while the first sealing member 51 rotates relative to the second sealing member 52.

Next, operation of the speed reducer 10 shown in Figs. 1 to 3 will be described. Specifically, an example of an assembly method for the illustrated speed reducer 10 will be described. The assembly method for the speed reducer 10 includes, as one example, an assembly step of assembling the speed reducer main body 10A, an assembly step of assembling the speed reducer cover 10B, and a connection step of connecting the speed reducer main body 10A and the speed reducer cover 10B. In the assembly method for the speed reducer 10 described below, the pressure applied to the main bearing 30 in the axial direction DA is adjusted during the step of assembling the speed reducer main body 10A. The pressure applied to the sealing member 50 in the axial direction DA is adjusted during the assembly step of assembling the speed reducer cover 10B.

First, an example of the step of assembling the speed reducer main body 10A will be described. The external gear 70 is mounted to the crankshaft 60 via the second bearing 12. In the speed reducer 10 shown in Figs. 1 to 3, the two external gears 70 are mounted to the crankshaft 60 via respective second bearings 12. The first main bearing 31, the crankshaft 60 and the external gear 70, the case body 41, and the second main bearing 32 are sequentially mounted to the carrier base 23 in this order. The crankshaft 60 is mounted to the carrier base 23 via the first bearing 11.

In the assembly step of the speed reducer main body 10A, the carrier plate 24 is mounted to the carrier base 23 from the second side in the axial direction DA, and the carrier base 23 and the carrier plate 24 are connected to each other. The connected carrier base 23 and carrier plate 24 form the carrier body 21. As described above, the carrier base 23 and the carrier plate 24 are restricted from relative movement by the pin P. By connecting the carrier base 23 and the carrier plate 24, the main bearing 30 is pressed in the axial direction DA between the carrier body 21 and the case body 41. In the state where the carrier base 23 is attached to the carrier plate 24, the crankshaft 60 protrudes toward the second side in the axial direction DA relative to the carrier plate 24.

In the step of assembling the speed reducer main body 10A shown in Figs. 1 and 3, the spacer 80 is disposed between the carrier base 23 and the carrier plate 24. In the illustrated speed reducer main body 10A, the pressure applied to the main bearing 30 in the axial direction DA during the assembly is adjusted by adjusting the thickness t of the spacer 80. Upon completion of the assembly step of the speed reducer main body 10A, the adjustment of the pressure applied to the main bearing 30 is finalized.

Next, an example of the step of assembling the speed reducer cover 10B will be described. The first sealing member 51 is connected to the carrier flange 22 that is not yet connected to the carrier body 21. The first sealing member 51 is connected to the carrier flange 22 such that it contacts the pressing surface 28, which is provided in the recess 27 of the carrier flange 22, via the second ring 54. The second sealing member 52 is connected to the case flange 42 that is not yet connected to the case body 41. The second sealing member 52 is connected to the case flange 42 such that it contacts the pressing surface 48 of the case flange 42 via the second ring 54.

In the assembly step of the speed reducer cover 10B, the case flange 42 is connected to the case body 41. The case flange 42 may be connected to the case body 41 by bolts or the like (not shown) that are received in second holes 47b. Once the case body 41 and the case flange 42 are connected to each other, relative movement between them is restricted.

In the assembly step of the speed reducer cover 10B, the carrier flange 22 is connected to the carrier body 21. The carrier flange 22 is connected to the carrier body 21 by the bolt(s) B1. Once the carrier body 21 and the carrier flange 22 are connected, relative movement between them is restricted. By connecting the carrier flange 22 to the carrier body 21, the assembly step of the speed reducer cover 10B is completed. By connecting the carrier flange 22 to the carrier body 21, the sealing member 50 is pressed in the axial direction DA between the carrier flange 22 and the case flange 42, as described above.

In the speed reducer cover 10B shown in Figs. 1 and 3, the pressure applied to the sealing member 50 in the axial direction DA during the assembly may be adjusted by adjusting the distance LB between the first surface 221 and the second surface 222 of the carrier flange 22. Alternatively, the pressure applied to the sealing member 50 during the assembly may be adjusted by disposing the spacer 90 between the case body 41 and the case flange 42 and adjusting a thickness LF of the spacer 90. Upon completion of the assembly step of the speed reducer cover 10B, the adjustment of the pressure applied to the sealing member 50 is finalized.

As described above, the assembly of the speed reducer 10 shown in Figs. 1 and 3 is completed. The speed reducer 10 may be disassembled by performing the above-described steps in reverse order. An example of a method of disassembling the speed reducer 10 may include a step of separating the carrier body 21 and the carrier flange 22 from each other, a step of separating the case body 41 and the case flange 42 from each other, and a step of separating the carrier body 21 and the case body 41 from each other.

In the conventional speed reducer exemplified in the '846 Publication, the portion of the carrier that is connected to the main bearing and the portion that is connected to the sealing member are integrally formed without joints. Similarly, in the case, the portion that is connected to the main bearing and the portion that is connected to the sealing member are integrally formed without joints. When such a carrier and case are connected to each other during assembly of the conventional speed reducer, both the main bearing and the sealing member are pressed in the axial direction. Thus, in the conventional carrier and case, the portion that presses the main bearing and the portion that presses the sealing member move in conjunction with each other.

The pressure required for proper operation of the main bearing may differ from the pressure required for proper operation of the sealing member. However, in conventional carriers and cases, the portion that presses the main bearing and the portion that presses the sealing member move in conjunction with each other, making it difficult to independently adjust the axial pressure applied to the main bearing and the axial pressure applied to the sealing member. Therefore, in conventional speed reducers, it is difficult to ensure stable operation of both the main bearing and the sealing member.

Whereas in the speed reducer 10 according to the embodiment illustrated in Figs. 1 to 5, at least one of the carrier 20 or the case 40 includes the main body portion 20M or 40M and the flange portion 20F or 40F. The main bearing 30 is pressed in the axial direction DA between the main body portion 20M of the carrier 20 and the case 40. The sealing member 50 is pressed in the axial direction DA between the flange portion 20F of the carrier 20 and the case 40. Alternatively, the main bearing 30 is pressed in the axial direction DA between the main body portion 40M of the case 40 and the carrier 20. The sealing member 50 is pressed in the axial direction DA between the flange portion 40F of the case 40 and the carrier 20.

When assembling the illustrated speed reducer 10, as described above, the pressure applied to the main bearing 30 in the axial direction DA is first adjusted, followed by adjustment of the pressure applied to the sealing member 50 in the axial direction DA. The pressure applied to the main bearing 30 is adjusted during the assembly step of the speed reducer main body 10A by adjusting the thickness t of the spacer 80. The pressure applied to the sealing member 50 is adjusted during the assembly step of the speed reducer cover 10B by adjusting the dimension LB of the carrier flange 22 or the thickness LF of the spacer 90. In this way, in the illustrated speed reducer 10, the axial pressure applied to the main bearing 30 and the axial pressure applied to the sealing member 50 can be independently adjusted. As a result, the speed reducer 10 can achieve stable operation of both the main bearing 30 and the sealing member 50.

In the speed reducer 10 shown in Figs. 1 to 5, the carrier 20 includes the main body portion 20M (carrier body 21) and the flange portion 20F (carrier flange 22) connected to the main body portion 20M. Similarly, the case 40 includes the main body portion 40M (case body 41) and the flange portion 40F (case flange 42) connected to the main body portion 40M. The main bearing 30 is pressed in the axial direction DA between the carrier body 21 and the case body 41. The sealing member 50 is pressed in the axial direction DA between the carrier flange 22 and the case flange 42. In this speed reducer 10, the axial pressure applied to the sealing member 50 can be adjusted by both the carrier 20, which includes the carrier flange 22, and the case 40, which includes the case flange 42. More specifically, the axial pressure applied to the sealing member 50 can be adjusted by adjusting the dimension LB of the carrier flange 22 and the thickness LF of the spacer 90. This enables precise adjustment of the pressure applied to the sealing member 50.

In order to stabilize the operation of the main bearing 30 and the sealing member 50 in the illustrated speed reducer 10, it is sufficient that at least one of the carrier 20 or the case 40 includes the main body portion 20M or 40M and the flange portion 20F or 40F. For example, among the carrier 20 and the case 40, the carrier 20 may be formed integrally without joints such that the carrier body 21 and the carrier flange 22 form a single body. Alternatively, among the carrier 20 and the case 40, the case 40 may be formed integrally without joints such that the case body 41 and the case flange 42 form a single body. Even with these examples, the operation of the main bearing and the sealing member can be stabilized in comparison with conventional speed reducers.

In the speed reducer 10 shown in Figs. 1 to 5, the main bearing 30 includes the inner race 33, the outer race 34, and the plurality of rolling elements 35 disposed between the inner race 33 and the outer race 34. The sealing member 50 overlaps with the inner race 33 in the axial direction DA. As described above, the illustrated speed reducer 10 can suppress an increase in the overall dimension of the speed reducer 10 in the radial direction DR by restricting the outward protrusion of the sealing member 50 in the radial direction DR. Furthermore, by suppressing the outward dimension increase of the sealing member 50 in the radial direction DR, the illustrated sealing member 50 can also suppress an increase in the relative rotational speed at the contact surface 55 between the first sealing member 51 and the second sealing member 52. As a result, the illustrated speed reducer 10 can also improve the durability of the sealing member 50. In the illustrated speed reducer 10, the sealing member 50 overlaps with the inner race 33 of the first main bearing 31 and the inner race 33 of the second main bearing 32 in the axial direction DA. To achieve the above-described improvement in durability of the sealing member 50, it is sufficient that the sealing member 50 overlaps with the inner race 33 of at least one of the first main bearing 31 or the second main bearing 32 in the axial direction DA.

In the speed reducer 10 shown in Figs. 1 to 5, the connection surface 200 between the carrier body 21 and the carrier flange 22 is situated on the same side as the sealing member 50 with respect to the main bearing 30. Both the connection surface 200 and the sealing member 50 are situated on the first side in the axial direction DA relative to the main bearing 30. When replacing the sealing member 50 in the illustrated speed reducer 10, the sealing member 50 can be replaced by removing the bolt(s) B1 and detaching the carrier flange 22 toward the first side in the axial direction DA. Moreover, in the illustrated speed reducer 10, it is not necessary to disconnect the connection between the carrier base 23 and the carrier plate 24 when replacing the sealing member 50. The carrier plate 24 does not need to be detached toward the second side in the axial direction DA during replacement of the sealing member 50. The illustrated speed reducer 10 can maintain the main bearing 30 in a pressed state in the axial direction DA even during replacement of the sealing member 50. Therefore, by arranging the connection surface 200, the sealing member 50, and the main bearing 30 in the above described manner, the sealing member 50 can be efficiently replaced without releasing the axial pressure applied to the main bearing 30. Since the sealing member 50 may come into contact with foreign substances such as dust, sand, or unclean water, it may require more frequent replacement than the main bearing 30. The illustrated speed reducer 10 can improve maintenance efficiency through efficient replacement of the sealing member 50.

In the embodiment described above, the speed reducer 10 includes the case 40, the carrier 20 that is at least partly disposed in the case 40, the main bearing 30 disposed between the case 40 and the carrier 20, and the sealing member 50 that seals between the carrier 20 and the case 40. At least one of the carrier 20 or the case 40 includes the main body portion 20M or 40M and the flange portion 20F or 40F. The main bearing 30 is pressed in the axial direction DA between the main body portion 20M of the carrier 20 and the case 40. The sealing member 50 is pressed in the axial direction DA between the flange portion 20F of the carrier 20 and the case 40. Alternatively, the main bearing 30 is pressed in the axial direction DA between the main body portion 40M of the case 40 and the carrier 20. The sealing member 50 is pressed in the axial direction DA between the flange portion 40F of the case 40 and the carrier 20.

In the embodiment described above, the speed reducer 10 includes the case 40, the carrier 20 that is at least partly disposed in the case 40, the main bearing 30 disposed between the case 40 and the carrier 20, and the sealing member 50 that seals between the carrier 20 and the case 40. The carrier 20 includes the carrier body 21 and the carrier flange 22 connected to the carrier body 21. The case 40 includes the case body 41 and the case flange 42 connected to the case body 41. The assembly method of the speed reducer 10 includes the step of pressing the main bearing 30 disposed between the carrier body 21 and the case body 41, the step of connecting the case flange 42 to the case body 41 and connecting the carrier flange 22 to the carrier body 21, and the step of pressing the sealing member 50 disposed between the carrier flange 22 and the case flange 42.

According to these embodiments, the axial pressure applied to the main bearing 30 in the axial direction DA can be adjusted first, followed by the adjustment of the pressure applied to the sealing member 50 in the axial direction DA. This allows the pressure applied to the main bearing 30 in the axial direction DA and the pressure applied to the sealing member 50 in the axial direction DA to be adjusted independently.

While the foregoing has described the embodiment with reference to specific examples, these specific examples do not limit the embodiment. The foregoing embodiment can be implemented in various other specific forms and is susceptible to omission, replacement, modification. and addition of various elements thereof within the purport of the invention.

The foregoing embodiments disclosed herein describe a plurality of physically separate constituent parts. They may be combined into a single part, and any one of them may be divided into a plurality of physically separate constituent parts. Irrespective of whether or not the components are integrated, they are acceptable as long as they are configured to attain the object of the invention.

According to the foregoing embodiments disclosed herein, a plurality of functions may be distributively provided. Some or all of these functions may be integrally provided. Conversely, a different plurality of functions may be integrally provided. Some or all of these functions can be distributively provided Irrespective of whether the functions are integrated or distributed, they are acceptable as long as they are configured to attain the object of the invention.

## Claims

1. A speed reducer comprising:
a case;
a carrier at least partly disposed in the case;
a main bearing disposed between the case and the carrier; and
a sealing member sealing between the carrier and the case,
wherein one of the carrier or the case is configured to rotate relative to the other of the carrier or the case about a rotational axis,
wherein the one of the carrier or the case includes a main body portion and a flange portion connected to the main body portion,
wherein the main bearing is pressed in an axial direction parallel to the rotational axis between the main body portion and the other of the carrier or the case, and
wherein the sealing member is pressed in the axial direction between the flange portion and the other of the carrier or the case.

2. The speed reducer of claim 1, wherein the other of the carrier or the case includes a second main body portion and a second flange portion connected to the second main body portion,
wherein the main bearing is pressed in the axial direction between the main body portion and the second main body portion, and
wherein the sealing member is pressed in the axial direction between the flange portion and the second flange portion.

3. The speed reducer of claim 1 or 2, wherein the main bearing includes an inner race, an outer race, and a plurality of rolling elements disposed between the inner race and the outer race, and
wherein the sealing member overlaps with the inner race in the axial direction.

4. The speed reducer of any one of claims 1 to 3, wherein a connection surface between the flange portion and the main body portion is situated on a same side in the axial direction as the sealing member with respect to the main bearing.

5. The speed reducer of any one of claims 1 to 4, wherein the other of the carrier or the case includes a connecting portion connecting the main body portion and the flange portion, and
wherein the connecting portion is positioned inward relative to the sealing member in a radial direction orthogonal to the rotational axis.

6. The speed reducer of any one of claims 1 to 5, wherein the flange portion includes a restricting portion restricting movement of the sealing member in the axial direction.

7. A method of assembling a speed reducer, the speed reducer including: a case that includes a case body and a case flange connected to the case body; a carrier that includes a carrier body and a carrier flange connected to the carrier body, the carrier being disposed at least partly in the case; a main bearing disposed between the case and the carrier; and a sealing member sealing between the carrier and the case,
the method comprising:
pressing the main bearing disposed between the carrier body and the case body;
connecting the case flange to the case body and connecting the carrier flange to the carrier body; and
pressing the sealing member disposed between the carrier flange and the case flange.
